(19) Europäisches Patentamt
European Patent Office
Office européen des brevets

(11) EP 0 914 640 B1

(12) # FASCICULE DE BREVET EUROPEEN

(45) Date de publication et mention de la délivrance du brevet:
**24.11.2004 Bulletin 2004/48**

(21) Numéro de dépôt: **98914904.2**

(22) Date de dépôt: **12.03.1998**

(51) Int Cl.7: **G07F 7/10**, H04L 9/08

(86) Numéro de dépôt international:
**PCT/FR1998/000503**

(87) Numéro de publication internationale:
**WO 1998/040853 (17.09.1998 Gazette 1998/37)**

(54) **PROCEDE DE STOCKAGE ET D'EXPLOITATION D'UNE INFORMATION SENSIBLE DANS UN MODULE DE SECURITE, ET MODULE DE SECURITE ASSOCIE**

VERFAHREN ZUM SPEICHEN UND BEARBEITEN SENSIBLER INFORMATIONEN IN EINEM SICHERHEITSMODUL UND DAZUGEHÖRIGES SICHERHEITSMODUL

METHOD FOR STORING AND OPERATING SENSITIVE INFORMATION IN A SECURITY MODULE, AND ASSOCIATED SECURITY MODULE

(84) Etats contractants désignés:
**BE CH DE DK ES FI FR GB IE IT LI NL SE**

(30) Priorité: **13.03.1997 FR 9702973**

(43) Date de publication de la demande:
**12.05.1999 Bulletin 1999/19**

(73) Titulaire: **CP8 Technologies**
**78431 Louveciennes (FR)**

(72) Inventeur: **HAZARD, Michel**
**F-78124 Mareil sur Mauldre (FR)**

(74) Mandataire: **Renault, Patricia Marie Jacqueline**
**Axalto S.A.**
**Intellectual Property Department**
**36-38, rue de la Princesse**
**B.P. 45**
**78431 Louveciennes Cedex (FR)**

(56) Documents cités:
**EP-A- 0 002 390**
**EP-A- 0 186 981**
**EP-A- 0 440 800**
**EP-A- 0 621 569**
**WO-A-96/07994**
**FR-A- 2 681 165**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 914 640 B1

## Description

L'invention concerne un procédé de stockage et d'exploitation d'une information sensible dans un module de sécurité, ainsi que le module de sécurité associé.

Le terme « information sensible » désigne en premier lieu toute information dont la connaissance a des répercussions significatives sur la sécurité des opérations mises en oeuvre dans le module de sécurité, comme par exemple :

- des clés cryptographiques utilisées en association avec des algorithmes dans des opérations de chiffrement ou déchiffrement d'un message, d'authentification d'une donnée ou d'une personne, ou de signature d'un message ;
- des codes d'authentification présentés par un usager auprès d'un terminal coopérant avec le module de sécurité (par exemple le "P.I.N", dérivé de l'anglais "Personal Identification Number") ;

Par extension, le terme "information sensible" désigne aussi toute information jugée confidentielle par celui qui la détient, comme par exemple un numéro de compte bancaire, un message, ou même l'ensemble d'un document.

Le terme "module de sécurité" doit être pris, soit dans son sens classique dans lequel il désigne un dispositif ayant vocation, dans un réseau de communication ou d'information, à être détenu par un organisme supervisant le réseau et à stocker de façon protégée des paramètres secrets et fondamentaux du réseau tels que des clés cryptographiques, soit comme désignant plus simplement un dispositif attribué à divers usagers du réseau et permettant à chacun d'eux d'avoir accès à celui-ci, ce dernier dispositif étant lui aussi susceptible de détenir des paramètres secrets. Le module de sécurité pourra prendre la forme d'un objet portatif du type carte à puce, tel qu'une carte bancaire.

FR 2 681 165 A décrit la transmission cryptée d'une information entre deux cartes à microprocesseur. On crypte l'information dans la première carte, on transmet l'information cryptée de la première carte à la deuxième, et on décrypte l'information dans la deuxième carte. On utilise une clé de cryptage puisée dans une réserve de clés potentielles qui est constituée par la mémoire de la carte.

L'invention part de la constatation que, à l'aide de moyens en matériel accessibles à tous, un fraudeur peut observer la consommation de courant du module de sécurité lors de l'exécution d'un programme ou d'instructions définies par une logique micro-câblée dans le module de sécurité, surtout quand ce dernier est de technologie CMOS. Il est notamment possible d'identifier des portions particulières du programme qui assurent la lecture d'informations en mémoire EEPROM, en particulier les informations sensibles définies ci-dessus.

L'invention vise donc à renforcer la sécurité des modules de sécurité, au sens précisé ci-dessus, en assurant la protection des informations sensibles, notamment lors de leur transfert entre une mémoire EEPROM et une mémoire RAM où l'inverse, en les chiffrant au moyen d'une clé de protection temporaire dont le contenu varie à une certaine fréquence, notamment une fréquence qui est fonction du degré de confidentialié de l'information sensible.

Elle concerne à cet effet un procédé de stockage d'une information sensible ISj dans un module de sécurité comprenant des moyens de traitement de l'information et des moyens de mémorisation de l'information, caractérisé en ce qu'il comprend les étapes consistant à :

- faire chiffrer l'information sensible ISj par le module de sécurité au moyen d'une clé de protection temporaire de chiffrement CPi dans une version actuelle le $CPi_{(ai+1)}$ fournie par le module de sécurité et d'un algorithme de chiffrement stocké, avec un algorithme de déchiffrement associé, dans lesdits moyens de mémorisation ;
- faire stocker par le module de sécurité, dans une mémoire non volatile de celui-ci, l'information sensible sous forme chiffrée $\overline{ISj}_{(ai+1)}$ associée à des données d'identification définissant une clé de protection temporaire de déchiffrement CPid dans une version actuelle $CPid_{(ai+1)}$ associée à ladite version actuelle $CPi_{(ai+1)}$ de la clé de protection temporaire de chiffrement CPi, lesdites données d'identification comprenant une identité de clé CPid et un indice de mise à jour (ai+1) qui définit ladite version actuelle $CPid_{(ai+1)}$ de la clé de déchiffrement parmi plusieurs versions ; et
- dans le cas où la clé de protection temporaire de déchiffrement CPid dans sa version actuelle $CPid_{(ai+1)}$ n'est pas déjà stockée dans ladite mémoire non volatile, faire stocker cette version par le module de sécurité.

L'invention concerne aussi un procédé d'exploitation d'une information sensible ISj dans un module de sécurité comprenant des moyens de traitement de l'information et des moyens de mémorisation de l'information, cette information sensible ISj étant sous une forme chiffrée par le module de sécurité au moyen d'une clé de protection temporaire de chiffrement CPi dans une version actuelle $CPi_{(ai+1)}$ fournie par le module de sécurité et d'un algorithme de chiffrement stocké, avec un algorithme de déchiffrement associé, dans lesdits moyens de mémorisation, l'information sensible sous forme chiffrée $\overline{ISj}_{(ai+1)}$ étant stockée dans une mémoire non volatile du module de sécurité en association avec des données d'identification définissant une clé de protection temporaire de déchiffrement CPid dans une version actuelle $CPid_{(ai+1)}$ associée à ladite version actuelle $CPi_{(ai+1)}$ de la clé de protection temporaire de chiffrement CPi, lesdites données d'identification comprenant une identité de clé CPid et un indice de mise à jour (ai+1) qui définit ladite version actuelle $CPid_{(ai+1)}$ de la clé de déchiffrement parmi plusieurs versions, caractérisé en ce qu'il comprend les étapes consistant à :

- faire sélectionner par le module de sécurité, à chaque demande d'utilisation de l'information sensible ISj émanant de l'intérieur ou de l'extérieur de celuici, ladite version actuelle $CPid_{(ai+1)}$ de la clé de protection temporaire de déchiffrement CPid associée à cette information sensible, au moyen desdites données d'identification ;
- faire déchiffrer par le module de sécurité l'information sensible chiffrée $\overline{ISj}_{(ai+1)}$ , au moyen de la version actuelle $CPid_{(ai+1)}$ de la clé de protection temporaire de déchiffrement CPid et de l'algorithme de déchiffrement, et stocker provisoirement l'information sensible ISj sous une forme déchiffrée ainsi obtenue de telle façon qu'elle disparaisse du module de sécurité après une utilisation de cette information sensible ; et
- faire utiliser par le module de sécurité l'information sensible ISj sous sa forme déchiffrée.

L'invention concerne enfin un module de sécurité agencé pour mettre en oeuvre les procédés ci-dessus.

D'autres détails et avantages de la présente invention apparaîtront au cours de la description suivante d'un mode d'exécution préféré mais non limitatif, en regard des dessins annexés sur lesquels :

La figure 1 est le schéma d'un module de sécurité auquel est destinée l'invention, coopérant avec un dispositif de traitement de l'information ;
La figure 2 est un tableau présentant un jeu de clés de protection temporaires et différents attributs de celles-ci ;
La figure 3 est un tableau présentant un ensemble d'informations sensibles et les clés de protection temporaires qui leur sont attribuées respectivement ;
La figure 4 est un organigramme d'une procédure de chiffrement initial d'une quelconque information sensible ISj ;
La figure 5 est un organigramme d'une procédure de déchiffrement de l'information sensible $\overline{ISj}$, en vue de son utilisation dans un traitement ;
La figure 6 est un organigramme d'une procédure de rafraîchissement périodique d'une quelconque clé de protection temporaire CPi ;
Les figures 7 et 8 représentent des tableaux correspondant respectivement à ceux des figures 2 et 3, mais comportant des clés de protection temporaires ou des informations sensibles rafraîchies ; et
La figure 9 est un organigramme d'une procédure de rafraîchissement périodique d'une quelconque information sensible.

Le dispositif de traitement de l'information 1 représenté sur la figure 1 comprend de façon connue en soi un microprocesseur 2 auquel sont reliés une mémoire ROM 3, et une mémoire RAM 4, des moyens 5 pour coopérer, avec ou sans contact physique, avec un module de sécurité 8, et une interface de transmission 7 permettant au dispositif de traitement de l'information de communiquer avec un autre dispositif semblable, soit directement, soit au travers d'un réseau de communication.

Le dispositif 1 peut en outre être équipé de moyens de stockage tels que des disquettes ou disques amovibles ou non, de moyens de saisie (tels qu'un clavier et/ou un dispositif de pointage du type souris) et de moyens d'affichage, ces différents moyens n'étant pas représentés sur la figure 1.

Le dispositif de traitement de l'information peut être constitué par tout appareil informatique installé sur un site privé ou public et apte à fournir des moyens de gestion de l'information ou de délivrance de divers biens ou services, cet appareil étant installé à demeure ou portable. Il peut notamment s'agir aussi d'un appareil de télécommunications.

Par ailleurs, le module de sécurité 8 inclut des moyens de traitement de l'information 9, une mémoire non volatile 10, une mémoire volatile de travail RAM 14, et des moyens 13 pour coopérer avec le dispositif de traitement de l'information. Ce module est agencé pour définir, dans la mémoire 10, une zone secrète 11 dans laquelle des informations une fois enregistrées, sont inaccessibles depuis l'extérieur du module mais seulement accessibles aux moyens de traitement 9, et une zone libre 12 qui est accessible depuis l'extérieur du module pour une lecture et/ou une écriture d'informations. Chaque zone de la mémoire non volatile 10 peut comprendre une partie non modifiable ROM et une partie modifiable EPROM, EEPROM, ou constituée de mémoire RAM du type "flash", c'est-à-dire présentant les caractéristiques d'une mémoire EEPROM avec en outre des temps d'accès identiques à ceux d'une RAM classique.

En tant que module de sécurité 8, on pourra notamment utiliser un microprocesseur à mémoire non volatile autoprogrammable, tel que décrit dans le brevet américain n° 4.382.279 au nom de la Demanderesse. Comme indiqué en colonne 1, lignes 13-25 de ce brevet, le caractère autoprogrammable de la mémoire correspond à la possibilité pour un programme fi situé dans cette mémoire, de modifier un autre programme fj situé également dans cette mémoire en un programme gj. Bien que les moyens à mettre en oeuvre pour réaliser cette autoprogrammation puissent varier selon la technique utilisée pour concevoir les moyens de traitement de l'information 9, on rappelle que, dans le cas où ces moyens de traitement sont constitués par un microprocesseur associé à une mémoire non volatile et selon le brevet précité, ces moyens peuvent inclure :

- des mémoires tampon de données et d'adresses, associées à la mémoire ;
- un programme d'écriture dans la mémoire, chargé dans celle-ci et contenant notamment les instructions permettant le maintien d'une part de la tension de programmation de la mémoire, et d'autre part des données à écrire et de leurs adresses, pendant un temps suffisant, ce programme d'écriture pouvant toutefois être remplacé par un automate d'écriture à circuits logiques.

Dans une variante, le microprocesseur du module de sécurité 8 est remplacé -ou tout du moins complété- par des circuits logiques implantés dans une puce à semi-conducteurs. En effet, de tels circuits sont aptes à effectuer des calculs, notamment d'authentification et de signature, grâce à de l'électronique câblée, et non microprogrammée. Ils peuvent notamment être de type ASIC (de l'anglais « Application Specific Integrated Circuit »). A titre d'exemple, on peut citer le composant de la société SIEMENS commercialisé sous la référence SLE 4436 et celui de la société SGS-THOMSON commercialisé sous la référence ST 1335.

Avantageusement, le module de sécurité 8 sera conçu sous forme monolithique sur une seule puce.

En variante au microprocesseur à mémoire non volatile autoprogrammable décrit ci-dessus, le caractère sécuritaire du module de sécurité pourra résulter de sa localisation dans une enceinte inviolable.

L'invention met en oeuvre plusieurs clés de protection temporaires de chiffrement CP1,.....CPi,..... CPn et plusieurs clés de protection temporaires de déchiffrement associées CPd1,.....CPdi,.....CPdn. Selon le type d' algorithme de chiffrement utilisé, les clés de protection temporaires de déchiffrement sont identiques aux clés de protection temporaires de chiffrement ou bien différentes de celles-ci. Ainsi, en tant qu'algorithme de chiffrement , on utilisera typiquement un algorithme symétrique à clé secrète, tel que l'algorithme DES (de l'anglais Data Encryption Standard), la clé secrète correspondant à l'une des clés de protection temporaires de chiffrement CP1,.....CPi,.....CPn. Pour ce type d'algorithmes, on utilise un algorithme de déchiffrement qui est égal à l'inverse de l'algorithme de chiffrement, et la clé secrète est utilisée indifféremment pour le chiffrement et le déchiffrement. En d'autres termes, l'opération de déchiffrement utilise une clé de déchiffrement qui est identique à la clé de chiffrement.

Dans une variante moins avantageuse, on utilise un algorithme asymétrique à clé publique, tel que l'algorithme RSA (des inventeurs Rivest, Shamir, et Adleman) qui met en oeuvre une clé de chiffrement publique et une autre clé de déchiffrement secrète, différente de la clé de chiffrement. Dans ce cas, le module de sécurité stocke ces deux clés, ou des paramètres permettant de les reconstituer, selon deux versions successives.

Dans la description des figures qui va suivre, on utilise un algorithme symétrique à clé secrète,. de sorte que les clés de protection temporaires de déchiffrement CPd1,.....CPdi,.....CPdn se confondent avec les clés de protection temporaires de chiffrement CP1,..... CPi,.....CPn ; pour cette raison, les notations CPd1,..... CPdi,.....CPdn ne sont pas utilisées et sont remplacées par CP1,.....CPi.....CPn appelées alors simplement « clés de protection temporaires » sans préciser leur rôle de chiffrement ou déchiffrement.

L'algorithme de chiffrement pourra être identique à un algorithme utilisé pour différentes fonctions relatives aux applications auxquelles est destiné le module de sécurité , ou bien être spécifique et dédié à la tâche de chiffrement des clés de protection temporaires.

Le tableau de la figure 2 comprend une première colonne définissant un nombre n de clés de protection temporaires CP1,.....CPi,.......CPn portant respectivement un numéro de clé N1,.....Ni,.....Nn servant à les désigner. En vue de parer à toute interruption de traitement intempestive du module de sécurité, et comme précisé par la suite, on stocke, pour chaque clé de protection temporaire , deux valeurs successives de la clé repérées chacune par un indice de mise à jour relatif à cette clé et repéré par a1,....ai,.....an. Cet indice de mise à jour a pour valeur un rang de mise à jour. Ainsi, la clé CPi a une valeur actuelle $CPi_{(ai+1)}$ définie par un indice de mise à jour (ai+1), et une valeur $CPi_{ai}$ immédiatement antérieure dans le temps et définie par un indice de mise à jour (ai). Les différents indices de mise à jour évoluent indépendamment les uns des autres.

Le tableau de la figure 3 comprend, dans une première colonne , des références d'un nombre m d'informations sensibles IS1, IS2,....IS(j-1), ISj,.....ISm , chacune étant stockée dans le module de sécurité sous forme chiffrée au moyen d'un algorithme de chiffrement et d'une clé de protection temporaire choisie parmi celles du tableau de la figure 2. Une deuxième colonne du tableau définit le numéro de la clé de protection temporaire utilisée pour chaque information sensible. Ainsi, la clé de protection temporaire CP1 (dont le numéro est N1) est utilisée pour protéger les informations sensibles IS1 , IS2 , la clé de protection temporaire CPi pour les informations sensibles IS(j-1), ISj, et la clé de protection temporaire CPn pour la seule information sensible ISm . Une troisième colonne du tableau précise l'indice de mise à jour que la clé de protection temporaire avait lorsqu'elle a été utilisée pour chiffrer l'information sensible. Ainsi, les informations sensibles IS1, IS2,...., ISj,.....ISm ont été chiffrées avec une clé portant le plus récent indice de mise à jour (a1+1), (ai+1), ou (an+1) selon les cas, tandis que l'information sensible IS(j-1) a été chiffrée avec une clé portant un indice de mise à jour (ai) précédant le plus récent indice de mise à jour (ai+1). Enfin, une quatrième colonne du tableau indique la version stockée de l'information sensible. Ainsi, l'information sensible ISj est stockée sous la forme chiffrée

$\overline{ISj}_{(ai+1)}$ qui porte l'indice de mise à jour (ai+1) relatif à la clé de protection temporaire associée.

Typiquement, les données contenues dans les tableaux des figures 2 et 3 sont stockées dans la mémoire non volatile 10 du module de sécurité, les valeurs des clés de protection temporaires telles que $CPi_{ai}$ étant stockées en zone secrète 11 tandis que les autres données peuvent être stockées, soit de préférence en zone secrète 11 , soit en zone libre 12 . En ce qui concerne la taille de ces données exprimée en bits, la taille des clés, qu'il s'agisse des clés de protection temporaires CPi ou de clés constituant les informations sensibles ISj , sera typiquement de 64 bits, tandis que celle des numéros Ni et indices de mise à jour(ai)sera typiquement d'1 octet. On notera que la première colonne du tableau de la figure 2 peut ne pas être stockée dans le module de sécurité , mais son stockage peut néanmoins être utile pour définir le type d'information dont il s'agit, si on souhaite stocker les clés de protection temporaires dans une zone contenant des informations d'un autre type.

Chaque clé de protection temporaire telle que CPi possède une valeur qui évolue dans le temps et est générée en interne par le module de sécurité. Selon une forme préférée de réalisation, chaque clé CPi est un aléa ou une fonction d'un aléa produit par le module de sécurité, de sorte que son évolution dans le temps est imprévisible. Cet aléa pourra être généré de façon logicielle, par exemple selon l'un des procédés décrits dans les brevets américains N°5.177.790 ou 5.365.466, ou au moyen d'un circuit produisant une grandeur physique aléatoire. Selon une forme moins préférée de réalisation, chaque clé CPi est une donnée qui évolue dans le temps selon une règle prédéterminée. Par exemple, cette donnée est égale au contenu d'un compteur qui est régulièrement incrémenté d'une unité. Selon les situations, chaque clé de protection temporaire CPi sera générée soit à l'avance, soit au moment de son utilisation pour chiffrer une information sensible ISj. Dans tous les cas, la création des clés de protection temporaires CPi ainsi que le chiffrement ou déchiffrement des informations sensibles ISj sont sous le seul contrôle du module de sécurité ou parfois d'une autorité spécialement habilitée, coopérant avec le module de sécurité , en ce sens que seuls le module de sécurité ou cette autorité prennent la décision d'effectuer ces opérations qui sont transparentes pour le monde extérieur non habilité (c'est-à-dire tout terminal et usager ordinaires coopérant avec le module de sécurité ), même si ces opérations peuvent être déclenchées indirectement par une demande de ce monde extérieur non habilité visant par exemple à faire intervenir une information sensible ISj dans un calcul cryptographique tel que le chiffrement ou la signature d'un message, ou l'authentification d'un message ou d'une personne.

Le cas le plus fréquent est celui où le module de sécurité coopère avec un terminal non habilité et contrôle lui-même la création des clés de protection temporaires CPi ainsi que le chiffrement ou déchiffrement des informations sensibles ISj. Un cas moins fréquent est celui où le module de sécurité coopère avec un terminal de l'autorité habilitée, soit avant une première utilisation du module de sécurité pour initialiser celui-ci, soit au cours de sa durée de vie pour permettre à l'autorité habilitée de contrôler le module de sécurité ou de modifier des fonctions ou données qu'il contient ; dans ce dernier cas, la création des clés de protection temporaires CPi ainsi que le chiffrement ou déchiffrement des informations sensibles ISj peuvent éventuellement être sous le contrôle de cette autorité, et non plus du module de sécurité.

La figure 4 est un organigramme d'une procédure de chiffrement initial d'une quelconque information sensible ISj , avant son stockage en mémoire non volatile 10 du module de sécurité. Un exemple typique est le cas où cette procédure est déclenchée depuis l'extérieur du module de sécurité, par une autorité désirant stocker dans celui-ci l'information sensible ISj. Dans une première étape 41, le module de sécurité stockeen mémoire de travail 14 la nouvelle information sensible ISj reçue de l'extérieur, tandis que dans une deuxième étape 42, le module de sécurité -ou éventuellement l'autorité habilitée -décide si une nouvelle clé de protection temporaire CPi ou une clé existante sera utilisée pour chiffrer l'information sensible ISj. Dans la négative, les moyens de traitement 9 du module de sécurité sélectionnent (étape 43) une clé de protection temporaire existant en mémoire non volatile 10 et la transfèrent (étape 44) en mémoire de travail volatile 14 . Selon l'exemple de la figure 3, il s'agit de la clé CPi, portant le numéro Ni. Le module de sécurité choisit, en tant que valeur de clé, celle qui est à l'indice de mise à jour le plus élevé : en l'espèce, il s'agit de l'indice (ai+1), mais si cette clé n'avait jamais été mise à jour, il s'agirait de l'indice 1. Si, au contraire, il est décidé à l'étape 42 qu'une nouvelle clé de protection temporaire doit être créée, cette création par le module de sécurité s'effectue à l'étape 45 en mémoire de travail 14 et la clé est sauvegardée (étape 46) en mémoire non volatile pour un usage ultérieur.

A l'étape 47, le module de sécurité chiffre l'information ISj avec la clé CPi pour obtenir un résultat $\overline{ISj}_{(ai+1)}$. A l'étape 48, le module de sécurité stocke ce résultat dans une zone de la mémoire non volatile dédiée à cette information sensible. Naturellement, le module de sécurité stocke, en association avec l'information sensible $\overline{ISj}_{(ai+1)}$et comme illustré sur la figure 3, le numéro Ni et l'indice de mise à jour (ai+1) de la clé utilisée.

La figure 5 est un organigramme d'une procédure de déchiffrement de l'information sensible $\overline{ISj}$, en vue de son utilisation dans un traitement, typiquement un traitement interne au module de sécurité. A l'étape 51, une demande d'utilisation d'une information sensible ISj est formulée, par exemple à l'initiative du dispositif de traitement de l'information 1, de sorte qu'à l'étape 52, le module de sécurité transfère l'information sensible sous sa forme chiffrée $\overline{ISj}_{(ai+1)}$ et la clé de protection temporaire correspondante CPi (dans la version applicable ai+1) depuis sa mémoire non volatile 10 dans sa mémoire de travail 14. Il y déchiffre alors (étape 53) l'information sensible avec la clé pour obtenir l'information sensible déchiffrée ISj. A l'étape 54, le module de sécurité utilise l'information sensible déchiffrée ISj dans le traitement à effectuer. On notera qu'après utilisation dans le traitement à effectuer, l'information sensible déchiffrée ISj disparaîtra de façon qu'elle ne réside pas durablement dans le module de sécurité. Ceci est obtenu, dans cet exemple, grâce à une propriété d'une mémoire volatile selon laquelle les informations qu'elle contient disparaissent lors de sa mise hors tension intervenant à la fin de la communication avec le dispositif de traitement de l'information 1.

La figure 6 est un organigramme d'une procédure de rafraîchissement (c'est-à-dire de renouvellement) périodique d'une quelconque clé de protection temporaire CPi. Son intérêt réside notamment en ce qu'une variation du contenu de cette clé est ainsi produite, rendant très difficile toute tentative frauduleuse pour deviner cette clé ; de plus, cette clé rafraîchie permettra, par un nouveau chiffrement des informations sensibles associées, de rafraîchir la forme chiffrée de celles-ci, rendant d'autant plus difficile toute tentative frauduleuse pour deviner le contenu des informations sensibles à partir de leur forme chiffrée. En effet, on sait qu'un fraudeur peut éventuellement tirer parti de l'observation des signaux électriques présents aux bornes du module de sécurité, notamment durant les transferts de données entre la mémoire non volatile et la mémoire de travail 14, signaux qui sont en pratique toujours influencés par la nature des traitements effectués par le module de sécurité. Moyennant le stockage par le fraudeur d'un nombre important de telles observations et une analyse statistique, celui-ci peut éventuellement parvenir à reconstituer les informations sensibles concernées.

La procédure de la figure 6 est déclenchée, soit à l'initiative du module de sécurité qui est agencé pour rafraîchir ses clés de protection temporaires à un rythme prédéterminé voire aléatoire , soit à l'initiative du dispositif de traitement de l'information 1 qui envoie à cet effet au module de sécurité un message ou une commande approprié, bien que dans ce dernier cas, l'exécution proprement dite de la procédure demeure sous le seul contrôle du module de sécurité, sauf éventuellement dans le cas particulier où le dispositif de traitement de l'information 1 est celui de l'autorité habilitée. Le rafraîchissement est effectué à un rythme qui est de préférence fonction du type d'information sensible considéré : ainsi, ce rythme sera élevé pour une information sensible telle qu'un code confidentiel d'usager ou « PIN » (de l'anglais Personal Identification Number) qui, compte tenu du faible nombre de chiffres qu'il comporte habituellement et de son utilisation fréquente, est davantage sujet à la fraude qu'une clé cryptographique de chiffrement ou de signature. Le module de sécurité stockera avantageusement, dans sa mémoire non volatile 10, des indications sur le rythme de rafraîchissement à appliquer à chaque information sensible. Par exemple, le rafraîchissement pourra être prévu à chaque fois que l'information sensible considérée aura été utilisée un nombre prédéterminé de fois.

Dans une première étape 61, le module de sécurité consulte son tableau de la figure 2 pour déterminer si la clé de protection temporaire CPi qu'il doit rafraîchir est à l'indice de mise à jour le plus élevé pour toutes les informations sensibles qu'elle protège. En effet, sachant qu'on souhaite ne conserver de préférence, pour chaque clé, que deux versions successives, le rafraîchissement d'une clé suppose l'effacement de la version la plus ancienne pour écrire à la place la version la plus récente ; or, cet effacement ne peut se faire que si aucune information sensible stockée actuellement n'aura besoin d'être déchiffrée au moyen de la version la plus ancienne, faute de quoi ce déchiffrement ne sera pas possible.

Si la condition posée à l'étape 61 n'est pas remplie, le module de sécurité va procéder à une mise à jour de la forme chiffrée des informations sensibles concernées. Tout d'abord, à l'étape 62, il transfère en mémoire de travail 14 ces informations sensibles (dans cet exemple, la seule information sensible $\overline{IS(j-1)}_{ai}$ ), la valeur correspondante $CPi_{ai}$ de la clé de protection temporaire CPi, et la valeur la plus récente $CPi_{(ai+1)}$ de cette même clé. A l'étape 63, il déchiffre l'information sensible $\overline{IS(j-1)}_{ai}$ avec la clé $CPi_{ai}$ puis, à l'étape 64, il sauvegarde l'information sensible $\overline{IS(j-1)}_{ai}$ (c'est-à-dire sous sa forme chiffrée ) dans une zone tampon de la mémoire non volatile 10, pour éviter de la perdre au cas où le rechiffrement subséquent de IS(j-1) serait interrompu. A l'étape 65, le module de sécurité rechiffre l'information sensible IS(j-1) restituée avec la valeur la plus récente $CPi_{(ai+1)}$ de la clé de protection temporaire CPi pour obtenir une version la plus récente $\overline{IS(j-1)}_{(ai+1)}$ de la forme chiffrée de l'information sensible IS(j-1). Enfin, à l'étape 66, le module de sécurité remplace, en mémoire non volatile 10, la valeur la plus ancienne $\overline{IS(j-1)}_{ai}$ par la valeur la plus récente $\overline{IS(j-1)}_{(ai+1)}$ et il met à jour l'indice de mise à jour (ai) en l'incrémentant d'une unité pour obtenir (ai+1) : cette situation est illustrée en caractères gras sur la figure 8, troisième et quatrième colonnes du tableau.

Après cette étape, ou si la condition de l'étape 61 était déjà satisfaite, le module de sécurité génère, à l'étape 67, une nouvelle valeur $CPi_{(ai+2)}$ de la clé de protection temporaire CPi à un nouvel indice de mise à jour (ai+2) en mémoire de travail 14. Comme indiqué précédemment, selon un mode préféré de réalisation, cette nouvelle valeur est un aléa ou une fonction d'un aléa. Enfin, à l'étape 68, le module de sécurité remplace, dans son tableau de la figure 2 situé en mémoire non volatile 10, la plus ancienne valeur $CPi_{ai}$ de la clé de protection temporaire CPi par la plus récente $CPi_{(ai+2)}$ et il met à jour l'indice de mise à jour (ai) en l'incrémentant de deux unités pour obtenir (ai+2) : cette situation est illustrée en caractères gras sur la figure 7, troisième et quatrième colonnes du tableau..

La figure 9 est un organigramme d'une procédure de rafraîchissement périodique d'une quelconque information sensible. Typiquement, cette procédure fera suite à la procédure de rafraîchissement de clés de la figure 6 et concernera précisément les informations sensibles associées aux clés ainsi rafraîchies ; toutefois, en variante, elle pourra être exécutée à tout moment ultérieur. Elle sera déclenchée, comme la procédure de la figure 6, soit à l'initiative du module de sécurité qui est agencé pour rafraîchir ses informations sensibles à un rythme prédéterminé voire aléatoire , soit à l'initiative du dispositif de traitement de l'information 1 qui envoie à cet effet au module de sécurité un message ou une commande approprié, bien que dans ce dernier cas, l'exécution proprement dite de la procédure demeure sous le seul contrôle du module de sécurité, sauf éventuellement dans le cas particulier où le dispositif de traitement de l'information 1 est celui de l'autorité habilitée.

A l'étape 91, une demande de rafraîchissement d'informations sensibles est donc formulée. A l'étape 92, le module de sécurité transfère les informations sensibles considérées et leurs clés de protection temporaires associées en mémoire de travail 14 : dans cet exemple, il s'agit des informations sensibles $\overline{IS(j-1)}_{(ai+1)}$ et $\overline{ISj}_{(ai+1)}$ , et des clés $CPi_{(ai+1)}$ et $CPi_{(ai+2)}$ . A l'étape 93, le module de sécurité déchiffre ces informations sensibles avec la clé $CPi_{(ai+1)}$ , puis, à l'étape 94, il rechiffre les informations sensibles IS(j-1) et ISj ainsi obtenues avec la clé $CPi_{(ai+2)}$ . A l'étape 95, il stocke les informations sensibles rechiffrées $\overline{IS(j-1)}_{(ai+2)}$ et $\overline{ISj}_{(ai+2)}$ dans la zone tampon précitée de la mémoire non volatile. Enfin, à l'étape 96, il stocke ces données dans la zone dédiée de la mémoire non volatile, à la place des informations sensibles $\overline{IS(j-1)}_{(ai+1)}$ et $\overline{ISj}_{(ai+1)}$ , et il met à jour l'indice de mise à jour (ai+1) en l'incrémentant d'une unité pour obtenir (ai+2) : cette situation est illustrée en caractères gras sur la figure 8, cinquième et sixième colonnes du tableau.

En ce qui concerne les différentes procédures décrites ci-dessus, l'enchaînement des étapes pourra être éventuellement provisoirement interrompu par les moyens de traitement de l'information 9 du module de sécurité pour exécuter d'autres tâches, indépendantes du procédé de l'invention mais jugées prioritaires à un moment donné. Dans ce cas, la procédure sera reprise dès la fin d'exécution de ces tâches. Par ailleurs, l'ordre dans lequel le module de sécurité traitera les clés de protection temporaires et les informations sensibles pourra changer selon différentes variantes. Par exemple, la procédure de la figure 6 effectue un rafraîchissement complet de la clé CPi, indépendamment de celui des autres clés ; dans une variante, le module de sécurité effectue un rafraîchissement simultané de plusieurs clés, les étapes de la figure 6 propres à chaque clé se trouvant alors juxtaposées ou imbriquées avec celles propres aux autres clés.

En ce qui concerne la façon de faire disparaître l'information sensible déchiffrée, après son utilisation dans un traitement donné, l'exemple ci-dessus a utilisé la propriété de perte des informations d'une mémoire volatile (ici, la mémoire de travail 14 ) lors de sa mise hors tension, à la fin de la communication avec le dispositif de traitement de l'information 1. En variante, si la mémoire utilisée pour le stockage provisoire de l'information sensible n'était pas volatile, il y aurait lieu de déclencher un effacement de cette information en mémoire , au moyen d'un ordre spécifique exécuté par le microprocesseur 9 du module de sécurité. L'expression « stocker provisoirement l'information sensible déchiffrée de telle façon qu'elle disparaisse du module de sécurité après utilisation », employée à certains endroits du présent texte, vise à couvrir notamment ces deux formes d'exécution.

Dans le cas de la variante de l'invention évoquée précédemment et utilisant un algorithme asymétrique à clé publique, un tel algorithme reçoit typiquement des données selon un format de 512 bits, c'est-à-dire sensiblement supérieur au format typique des informations sensibles (64 bits). Avantageusement, on procède alors à un regroupement ou concaténation de plusieurs informations sensibles pour atteindre un format d'ensemble de 512 bits, avant leur chiffrement commun par ledit algorithme.

Dans l'exemple décrit ci-dessus, le module de sécurité 8 fonctionne typiquement dans un mode accouplé avec un dispositif de traitement de l'information 1. En variante, le module de sécurité possède des moyens d'auto-alimentation en énergie électrique et met en oeuvre le procédé décrit ci-dessus de stockage ou d'exploitation d'une information sensible -ou au moins certaines étapes de celui-ci- dans un mode autonome, c'est-à-dire non accouplé avec un dispositif de traitement de l'information.

## Revendications

1. Procédé de stockage d'une information sensible ISj dans un module de sécurité (8) comprenant des moyens de traitement de l'information (9) et des moyens de mémorisation de l'information (10,14), **caractérisé en ce qu'**il comprend les étapes consistant à :

   - faire chiffrer l'information sensible ISj par le module de sécurité au moyen d'une clé de protection temporaire de chiffrement CPi dans une version actuelle $CPi_{(ai+1)}$ fournie par le module de sécurité et d'un algorithme de chiffrement stocké, avec un algorithme de déchiffrement associé, dans lesdits moyens de mémorisation ;

- faire stocker par le module de sécurité, dans une mémoire non volatile (10) de celui-ci, l'information sensible sous forme chiffrée $\overline{ISj}_{(ai+1)}$ associée à des données d'identification définissant une clé de protection temporaire de déchiffrement CPid dans une version actuelle $CPid_{(ai+1)}$ associée à ladite version actuelle $CPi_{(ai+1)}$ de la clé de protection temporaire de chiffrement CPi, lesdites données d'identification comprenant une identité de clé CPid et un indice de mise à jour (ai+1) qui définit ladite version actuelle $CPid_{(ai+1)}$ de la clé de déchiffrement parmi plusieurs versions ; et
- dans le cas où la clé de protection temporaire de déchiffrement CPid dans sa version actuelle $CPid_{(ai+1)}$ n'est pas déjà stockée dans ladite mémoire non volatile (10), faire stocker cette version par le module de sécurité.

**2.** Procédé de stockage selon la revendication 1, dans lequel le module de sécurité comprend des moyens de génération d'aléa fournissant des versions successives différentes d'un aléa, chaque version de la clé de protection temporaire de chiffrement CPi fournie par le module de sécurité étant obtenue à partir d'une version différente dudit aléa.

**3.** Procédé d'exploitation d'une information sensible ISj dans un module de sécurité (8) comprenant des moyens de traitement de l'information (9) et des moyens de mémorisation de l'information (10,14), cette information sensible ISj étant sous une forme chiffrée par le module de sécurité au moyen d'une clé de protection temporaire de chiffrement CPi dans une version actuelle $CPi_{(ai+1)}$ fournie par le module de sécurité et d'un algorithme de chiffrement stocké, avec un algorithme de déchiffrement associé, dans lesdits moyens de mémorisation, l'information sensible sous forme chiffrée $\overline{ISj}_{(ai+1)}$ étant stockée dans une mémoire non volatile (10) du module de sécurité en association avec des données d'identification définissant une clé de protection temporaire de déchiffrement CPid dans une version actuelle $CPid_{(ai+1)}$ associée à ladite version actuelle $CPi_{(ai+1)}$ de la clé de protection temporaire de chiffrement CPi, lesdites données d'identification comprenant une identité de clé CPid et un indice de mise à jour (ai+1) qui définit ladite version actuelle $CPid_{(ai+1)}$ de la clé de déchiffrement parmi plusieurs versions, **caractérisé en ce qu'**il comprend les étapes consistant à :

- faire sélectionner par le module de sécurité, lors d'une demande d'utilisation de l'information sensible ISj émanant de l'intérieur ou de l'extérieur de celui-ci, ladite version actuelle $CPid_{(ai+1)}$ de la clé de protection temporaire de déchiffrement CPid associée à cette information sensible, au moyen desdites données d'identification ;
- faire déchiffrer par le module de sécurité l'information sensible chiffrée $\overline{ISj}_{(ai+1)}$ , au moyen de la version actuelle $CPid_{(ai+1)}$ de la clé de protection temporaire de déchiffrement CPid et de l'algorithme de déchiffrement, et stocker provisoirement l'information sensible ISj sous une forme déchiffrée ainsi obtenue de telle façon qu'elle disparaisse du module de sécurité après une utilisation de cette information sensible ; et
- faire utiliser par le module de sécurité l'information sensible ISj sous sa forme déchiffrée.

**4.** Procédé d'exploitation selon la revendication 3, pour modifier périodiquement la forme chiffrée d'une information sensible, comprenant les étapes consistant à :

- faire déchiffrer par le module de sécurité l'information sensible stockée sous une forme chiffrée actuelle $\overline{ISj}_{(ai+1)}$ , au moyen de la version actuelle $CPid_{(ai+1)}$ de la clé de protection temporaire de déchiffrement CPid qui lui est associée et dudit algorithme de déchiffrement ;
- faire sélectionner par le module de sécurité une nouvelle version $CPi_{(ai+2)}$ de la clé de protection temporaire de chiffrement CPi ; puis
- faire rechiffrer par le module de sécurité l'information sensible déchiffrée ISj au moyen de la nouvelle version $CPi_{(ai+2)}$ de la clé de protection temporaire de chiffrement et dudit algorithme de chiffrement pour produire une nouvelle forme chiffrée $\overline{ISj}_{(ai+2)}$ de l'information sensible ; et
- stocker, dans le module de sécurité, l'information sensible sous sa nouvelle forme chiffrée $\overline{ISj}_{(ai+2)}$ et une nouvelle version $CPid_{(ai+2)}$ de la clé de protection temporaire de déchiffrement CPid associée à ladite nouvelle version $CPi_{(ai+2)}$ de la clé de protection temporaire de chiffrement.

**5.** Procédé d'exploitation selon la revendication 4, dans lequel le module de sécurité comprend des moyens de génération d'aléa fournissant des versions successives différentes d'un aléa, chaque version actuelle $CPi_{(ai+1)}$ et nouvelle version $CPid_{(ai+2)}$ de la clé de protection temporaire de chiffrement CPi fournie par le module de sécurité étant obtenue à partir d'une version différente dudit aléa.

**6.** Procédé d'exploitation selon la revendication 4, dans lequel on stocke dans la mémoire non volatile (10) du module de sécurité deux versions les plus récentes de chaque clé de protection temporaire de déchiffrement CPid, à savoir une avant-dernière version $CPid_{ai}$ et une dernière version $CPid_{(ai+1)}$ et, lorsqu'une nouvelle version $CPi_{(ai+2)}$ d'une quelconque clé de protection temporaire de chiffrement est produite par le module de sécurité, on fait stocker par celui-ci dans la mémoire non volatile (10) une nouvelle version correspondante $CPid_{(ai+2)}$ de la clé de protection temporaire de déchiffrement CPid associée, à la place de l'avant-dernière version $CPid_{ai}$ .

**7.** Procédé d'exploitation selon la revendication 6, dans lequel on chiffre plusieurs informations sensibles IS(j-1), ISj respectivement avec une avant-dernière version $CPi_{ai}$ et une dernière version $CPi_{(ai+1)}$ différentes d'une même clé de protection temporaire de chiffrement CPi pour donner des formes chiffrées $\overline{IS(j-1)}_{ai}$ et $\overline{ISj}_{(ai+1)}$ et, lorsqu'une nouvelle version de ces informations sensibles doit être produite par le module de sécurité, on exécute les étapes suivantes :

- faire déchiffrer par le module de sécurité les informations sensibles $\overline{IS(j-1)}_{ai}$ chiffrées avec l'avant-dernière version $CPi_{ai}$ de la clé de protection temporaire chiffrement CPi, au moyen de l'avant-dernière version $CPid_{ai}$ de la clé de protection temporaire de déchiffrement CPid qui lui est associée ;
- faire rechiffrer par le module de sécurité les informations sensibles déchiffrées IS(j-1) au moyen de ladite dernière version $CPi_{(ai+1)}$ de la clé de protection temporaire de chiffrement pour produire une nouvelle forme chiffrée $\overline{IS(j-1)}_{(ai+1)}$ de l'information sensible ; et
- stocker, dans le module de sécurité, ces informations sensibles sous leur nouvelle forme chiffrée $\overline{IS(j-1)}_{(ai+1)}$ ; et, pour produire ladite nouvelle version des informations sensibles IS (j-1), ISj , on exécute les étapes suivantes :

- faire déchiffrer par le module de sécurité toutes les informations sensibles $\overline{IS(j-1)}_{(ai+1)}$ et $\overline{ISj}_{(ai+1)}$ relatives à ladite clé de protection temporaire de chiffrement CPi au moyen d'une dernière version $CPid_{(ai+1)}$ de la clé de protection temporaire de déchiffrement CPid associée à ladite dernière version $CPi_{(ai+1)}$ de la clé de protection temporaire de chiffrement CPi
- faire rechiffrer par le module de sécurité les informations sensibles déchiffrées IS(j-1), ISj , au moyen d'une nouvelle version $CPi_{(ai+2)}$ de la clé de protection temporaire de chiffrement et dudit algorithme de chiffrement pour produire une nouvelle forme chiffrée $\overline{IS(j-1)}_{(ai+2)}$ et $\overline{ISj}_{(ai+2)}$ de ces informations sensibles ; et
- stocker, dans le module de sécurité, ces informations sensibles sous leur nouvelle forme chiffrée $\overline{IS(j-1)}_{(ai+2)}$ et $\overline{ISj}_{(ai+2)}$ et une nouvelle version $CPid_{(ai+2)}$ de la clé de protection temporaire de déchiffrement CPid associée à ladite nouvelle version $CPi_{(ai+2)}$ de la clé de protection temporaire de chiffrement.

**8.** Module de sécurité (8) comprenant des moyens de traitement de l'information (9) et des moyens de mémorisation de l'information (10,14), **caractérisé en ce qu** il comprend :

- des moyens de production de clés agencés pour produire une ou plusieurs clés de protection temporaires de chiffrement CP1,....,CPi,.... CPn et autant de clés de protection temporaires de déchiffrement associées CP1d,....,CPid,.... CPnd et, pour chaque clé de protection temporaire de chiffrement CPi et de déchiffrement CPid, plusieurs versions successives $CPi_{ai}$ , $CPi_{(ai+1)}$ , $CPi_{(ai+2)}$ et $CPid_{ai}$ , $CPid_{(ai+1)}$ , $CPid_{(ai+2)}$ ;
- des moyens agencés pour associer à une information sensible déterminée ISj une clé de protection temporaire de chiffrement CPi déterminée et une clé de protection temporaire de déchiffrement CPid associée à la clé de protection temporaire de chiffrement CPi ;
- des moyens de chiffrement agencés pour effectuer des chiffrements successifs de l'information sensible ISj en utilisant l'une ou l'autre desdites versions successives $CPi_{ai}$ , $CPi_{(ai+1)}$ , $CPi_{(ai+2)}$ de la clé de protection temporaire de chiffrement associée à cette information sensible et un algorithme de chiffrement stocké dans les moyens de mémorisation (10,14) ; et
- des moyens de déchiffrement agencés pour effectuer des déchiffrements successifs de l'information sensible ISj en utilisant à chaque déchiffrement, parmi lesdites versions successives $CPid_{ai}$ , $CPid_{(ai+1)}$ , $CPid_{(ai+2)}$ de la clé de protection temporaire de déchiffrement, celle qui est associée à la version de la clé de protection temporaire de chiffrement utilisée pour le chiffrement correspondant, et un algorithme de déchiffrement stocké dans les moyens de mémorisation (10,14).

**9.** Module de sécurité selon la revendication 8, qui comprend des moyens de génération d'aléa fournissant des versions successives différentes d'un aléa, chacune desdites versions successives $CPi_{ai}$ , $CPi_{(ai+1)}$ , $CPi_{(ai+2)}$ de chaque clé de protection temporaire de chiffrement CPi fournie par le module de sécurité étant obtenue à partir d'une version différente dudit aléa.

**Patentansprüche**

1. Verfahren zum Speichern einer sensiblen Information ISj in einem Sicherheitsmodul (8) mit Mittel zum Bearbeiten der Information (9) und Mittel zum Speichern der Information (10,14), **dadurch gekennzeichnet, dass** es folgende Schritte umfasst:

   - Verschlüsseln lassen der sensiblen Information ISj durch das Sicherheitsmodul mittels eines temporären Verschlüsselungsschutzschlüssels CPi in einer vom Sicherheitsmodul bereitgestellten aktuellen Version $CPi_{(ai+1)}$ und eines gespeicherten Verschlüsselungsalgorithmus mit einem dazugehörigen Entschlüsselungsalgorithmus in den besagten Mitteln zum Speichern;
   - durch das Sicherheitsmodul in einem nichtflüchtigen Speicher (10) davon die sensible Information in verschlüsselter Form $\overline{ISj}_{(ai+1)}$ in Verbindung mit Identifikationsdaten speichern lassen, wobei diese Identifikationsdaten einen temporären Entschlüsselungsschutzschlüssel CPid in einer der besagten aktuellen Version $CPi_{(ai+1)}$ des temporären Verschlüsselungsschutzschlüssels CPi zugeordneten aktuellen Version $CPid_{(ai+1)}$ definieren und eine Schlüsselidentität CPid sowie einen Aktualisierungsindex (ai+ 1) enthalten, der die aktuelle Version $CPid_{(ai+1)}$ des Entschlüsselungsschlüssels unter mehreren Versionen definiert; und
   - im Falle, dass der temporäre Entschlüsselungsschutzschlüssel CPid in seiner aktuellen Version $CPid_{(ai+1)}$ nicht bereits in diesem nichtflüchtigen Speicher (10) gespeichert ist, diese Version vom Sicherheitsmodul speichern lassen.

2. Speicherverfahren nach Anspruch 1, bei dem das Sicherheitsmodul Mittel zur Zufallserzeugung umfasst, die verschiedene Folgeversionen eines Zufalls bereitstellen, wobei jede vom Sicherheitsmodul bereitgestellte Version des temporären Verschlüsselungsschutzschlüssels CPi ausgehend von einer verschiedenen Version des besagten Zufalls erzielt wird.

3. Verfahren zum Bearbeiten einer sensiblen Information ISj in einem Sicherheitsmodul (8) mit Mittel zum Bearbeiten der Information (9) und Mittel zum Speichern der Information (10,14), wobei diese sensible Information ISj durch das Sicherheitsmodul mittels eines temporären Verschlüsselungsschutzschlüssels CPi in einer vom Sicherheitsmodul bereitgestellten aktuellen Version $CPi_{(ai+1)}$ und eines gespeicherten Verschlüsselungsalgorithmus mit einem dazugehörigen Entschlüsselungsalgorithmus in den Mitteln zum Speichern in einer verschlüsselten Form vorliegt und die sensible Information in verschlüsselter Form $\overline{ISj}_{(ai+1)}$ in einem nicht-flüchtigen Speicher (10) des Sicherheitsmoduls in Verbindung mit Identifikationsdaten gespeichert wird, die einen temporären Entschlüsselungsschutzschlüssel CPid in einer der besagten aktuellen Version $CPi_{(ai+1)}$ des temporären Verschlüsselungsschutzschlüssels CPi zugeordneten aktuellen Version $CPid_{(ai+1)}$ definieren, wobei die Identifikationsdaten eine Schlüsselidentität CPid und einen Aktualisierungsindex (ai+1) enthalten, der die aktuelle Version $CPid_{(ai+1)}$ des Entschlüsselungsschlüssels unter mehreren Versionen definiert, **dadurch gekennzeichnet, dass** es folgende Schritte umfasst:

   - während einer innerhalb oder außerhalb des Sicherheitsmoduls gestellten Anfrage hinsichtlich der Anwendung der sensiblen Information ISj vom Sicherheitsmodul die aktuelle Version $CPid_{(ai+1)}$ des dieser sensiblen Information zugeordneten temporären Entschlüsselungsschutzschlüssels CPid mittels der Identifikationsdaten auswählen lassen;
   - das Sicherheitsmodul die verschlüsselte sensible Information $\overline{ISj}_{(ai+1)}$ mittels der aktuellen Version $CPid_{(ai+1)}$ des temporären Entschlüsselungsschutzschlüssels CPid und des Entschlüsselungsalgorithmus entschlüsseln lassen und die sensible Information ISj in auf diese Weise erhaltener entschlüsselter Form vorübergehend derart zu speichern, dass sie nach einer Anwendung dieser sensiblen Information vom Sicherheitsmodul verschwindet; und
   - das Sicherheitsmodul die sensible Information ISj in ihrer entschlüsselten Form anwenden lassen.

4. Bearbeitungsverfahren nach Anspruch 3 zum regelmäßigen Modifizieren der verschlüsselten Form einer sensiblen Information, das folgende Schritte umfasst:

   - vom Sicherheitsmodul die in einer aktuellen verschlüsselten Form $\overline{ISj}_{(ai+1)}$ gespeicherte sensible Information mittels der aktuellen Version $CPid_{(ai+1)}$ des ihr zugeordneten temporären Entschlüsselungsschutzschlüssels CPid und des Entschlüsselungsalgorithmus entschlüsseln lassen;
   - das Sicherheitsmodul eine neue Version $CPi_{(ai+2)}$ des temporären Verschlüsselungsschutzschlüssels CPi auswählen lassen; dann
   - das Sicherheitsmodul die entschlüsselte sensible Information ISj mittels der neuen Version $CPi_{(ai+2)}$ des temporären Verschlüsselungsschutzschlüssels und des Verschlüsselungsalgorithmus erneut verschlüsseln lassen, um eine neue verschlüsselte Form $\overline{ISj}_{(ai+2)}$ der sensiblen Information zu erzeugen; und

- die sensible Information in ihrer neuen verschlüsselten Form $\overline{ISj}_{(ai+2)}$ sowie eine der neuen Version $CPi_{(ai+2)}$ des temporären Verschlüsselungsschutzschlüssels zugeordnete neue Version $CPid_{(ai+2)}$ des temporären Entschlüsselungsschutzschlüssels CPid im Sicherheitsmodul speichern.

**5.** Bearbeitungsverfahren nach Anspruch 4, bei dem das Sicherheitsmodul Mittel zur Zufallserzeugung umfasst, die verschiedene Folgeversionen eines Zufalls bereitstellen, wobei jede vom Sicherheitsmodul bereitgestellte aktuelle Version $CPi_{(ai+1)}$ und neue Version $CPid_{(ai+2)}$ des temporären Verschlüsselungsschutzschlüssels CPi ausgehend von einer verschiedenen Version des besagten Zufalls erzielt wird.

**6.** Bearbeitungsverfahren nach Anspruch 4, bei dem im nicht-flüchtigen Speicher (10) des Sicherheitsmoduls die beiden neuesten Versionen jedes temporären Entschlüsselungsschutzschlüssels CPid gespeichert werden, d. h. eine vorletzte Version $CPid_{ai}$ und eine letzte Version $CPid_{(ai+1)}$ und bei dem man, wenn eine neue Version $CPi_{(ai+2)}$ eines beliebigen temporären Verschlüsselungsschutzschlüssels vom Sicherheitsmodul erzeugt wird, von diesem im nicht-flüchtigen Speicher (10) eine entsprechende neue Version $CPid_{(ai+2)}$ des zugeordneten temporären Entschlüsselungsschutzschlüssels CPid anstatt der vorletzten Version $CPid_{ai}$ speichern lässt.

**7.** Bearbeitungsverfahren nach Anspruch 6, bei dem man mehrere sensible Informationen IS(j-1), ISj jeweils mit einer verschiedenen vorletzten Version $CPi_{ai}$ und einer letzten Version $CPi_{(ai+1)}$ desselben temporären Verschlüsselungsschutzschlüssels CPi verschlüsselt, um die verschlüsselten Formen $\overline{IS(j\text{-}1)}_{ai}$ und $\overline{ISj}_{(ai+1)}$ zu erzielen und man, wenn eine neue Version dieser sensiblen Informationen vom Sicherheitsmodul erzeugt werden muss, folgende Schritte ausführt:

- vom Sicherheitsmodul die mit der vorletzten Version $CPi_{ai}$ des temporären Verschlüsselungsschutzschlüssels CPi verschlüsselten sensiblen Informationen $\overline{IS(j\text{-}1)}_{ai}$ mittels der vorletzten Version $CPid_{ai}$ des ihm zugeordneten temporären Entschlüsselungsschutzschlüssels CPid entschlüsseln lassen;
- das Sicherheitsmodul die entschlüsselten sensiblen Informationen IS(j-1) mittels der letzten Version $CPi_{(ai+1)}$ des temporären Verschlüsselungsschutzschlüssels erneut verschlüsseln lassen, um eine neue verschlüsselte Form $\overline{IS(j\text{-}1)}_{(ai+1)}$ der sensiblen Information zu erzeugen; und
- diese sensible Informationen in ihrer neuen verschlüsselten Form $\overline{IS(j\text{-}1)}_{(aj+1)}$ im Sicherheitsmodul speichern; und bei dem man, um die neue Version der sensiblen Informationen IS(j-1), ISj zu erzielen, folgende Schritte ausführt:

- vom Sicherheitsmodul alle sensible Informationen $\overline{IS(j\text{-}1)}_{(ai+1)}$ und $\overline{ISj}_{(ai+1)}$ über den temporären Verschlüsselungsschutzschlüssel CPi mittels einer der letzten Version $CPi_{(ai+1)}$ des temporären Verschlüsselungsschutzschlüssels CPi zugeordneten letzten Version CPid(ai+1) des temporären Entschlüsselungsschutzschlüssels CPid entschlüsseln lassen;
- vom Sicherheitsmodul die entschlüsselten sensiblen Informationen IS(j-1), ISj mittels einer neuen Version $CPi_{(ai+2)}$ des temporären Verschlüsselungsschutzschlüssels und des Verschlüsselungsalgorithmus erneut verschlüsseln lassen, um eine neue verschlüsselte Form $\overline{IS(j\text{-}1)}_{(ai+2)}$ und $\overline{ISj}_{(ai+2)}$ dieser sensiblen Informationen zu erzeugen; und
- im Sicherheitsmodul diese sensible Informationen in ihrer neuen verschlüsselten Form $\overline{IS(j\text{-}1)}_{(ai+2)}$ und $\overline{ISj}_{(ai+2)}$ sowie eine der neuen Version $CPi_{(ai+2)}$ des temporären Verschlüsselungsschutzschlüssels zugeordnete neue Version $CPid_{(ai+2)}$ des temporären Entschlüsselungsschutzschlüssels CPid speichern.

**8.** Sicherheitsmodul (8) mit Mittel zum Bearbeiten der Information (9) und Mittel zum Speichern der Information (10,14), **dadurch gekennzeichnet, dass** es folgendes umfasst:

- Mittel zum Produzieren angeordneter Schlüssel, um einen oder mehrere temporäre Verschlüsselungsschutzschlüssel CP1, ..., CPi, ..., CPn und genauso viele zugeordnete temporäre Entschlüsselungsschutzschlüssel CP1d, ..., CPid, ..., CPnd und für jeden temporären Verschlüsselungsschutzschlüssel CPi und Entschlüsselungsschutzschlüssel CPid mehrere Folgeversionen $CPi_{ai}$, $CPi_{(ai+1)}$, $CPi_{(ai+2)}$ und $CPid_{ai}$, $CPid_{(ai+1)}$, $CPid_{(ai+2)}$ zu schaffen;
- angeordnete Mittel, um einer bestimmten sensiblen Information ISj einen bestimmten temporären Verschlüsselungsschutzschlüssel CPi und einen dem temporären Verschlüsselungsschutzschlüssel CPi zugeordneten temporären Entschlüsselungsschutzschlüssel CPid zuzuordnen;
- zum nacheinander folgenden Verschlüsseln der sensiblen Information ISj angeordnete Verschlüsselungsmittel unter Anwendung der einen oder anderen der Folgeversionen $CPi_{ai}$, $CPi_{(ai+1)}$, $CPi_{(ai+2)}$ des dieser sensiblen Information zugeordneten temporären Verschlüsselungsschutzschlüssels und eines in den Speichermitteln (10,14) gespeicherten Verschlüsselungsalgorithmus; und

- zum nacheinander folgenden Entschlüsseln der sensiblen Information ISj angeordnete Entschlüsselungsmittel unter Anwendung bei jedem Entschlüsseln des Schlüssels der Folgeversionen $CPid_{ai}$, $CPid_{(ai+1)}$, $CPid_{(ai+2)}$ des temporären Entschlüsselungsschutzschlüssels, der der zum entsprechenden Verschlüsseln verwendeten Version des temporären Verschlüsselungsschutzschlüssels zugeordnet ist, sowie eines in den Speichermitteln (10,14) gespeicherten Entschlüsselungsalgorithmus.

**9.** Sicherheitsmodul nach Anspruch 8, das Mittel zur Zufallserzeugung umfasst, die verschiedene Folgeversionen eines Zufalls bereitstellen, wobei jede vom Sicherheitsmodul bereitgestellte Folgeversion $CPi_{ai}$, $CPi_{(ai+1)}$, $CPi_{(ai+2)}$ jedes temporären Verschlüsselungsschutzschlüssels CPi ausgehend von einer verschiedenen Version des besagten Zufalls erzielt wird.

## Claims

**1.** Method for storing a sensitive item of information ISj in a security module (8) including information processing means (9) and information storage means (10,14), **characterised in that** it comprises the following steps:

- have the security module encrypt the sensitive item of information ISj using an encryption temporary protection key CPi in a current version $CPi_{(ai+1)}$ supplied by the security module and an encryption algorithm stored, with an associated decryption algorithm, in said storage means;
- have the security module store, in a non volatile memory (10) of the module, the sensitive item of information in encrypted form $\overline{ISj}_{(ai+1)}$ associated with identification data defining a decryption temporary protection key CPid in a current version $CPid_{(ai+1)}$ associated with said current version $CPi_{(ai+1)}$ of the encryption temporary protection key CPi, said identification data comprising a key identity CPid and an update index (ai+1) which defines said current version $CPid_{(ai+1)}$ of the decryption key amongst several versions; and
- if the decryption temporary protection key CPid in its current version $CPid_{(ai+1)}$ is not already stored in said non volatile memory (10), have this version stored by the security module.

**2.** Method for storing according to claim 1, in which the security module comprises random number generation means supplying different successive versions of a random number, each version of the encryption temporary protection key CPi supplied by the security module being obtained from a different version of said random number.

**3.** Method for operating a sensitive item of information ISj in a security module (8) including information processing means (9) and information storage means (10,14), this sensitive item of information ISj being in a form encrypted by the security module using an encryption temporary protection key CPi in a current version $CPi_{(ai+1)}$ supplied by the security module and an encryption algorithm stored, with an associated decryption algorithm, in said storage means, the sensitive item of information in encrypted form $\overline{ISj}_{(ai+1)}$ being stored in a non volatile memory (10) of the security module in association with identification data defining a decryption temporary protection key CPid in a current version $CPid_{(ai+1)}$ associated with said current version $CPi_{(ai+1)}$ of the encryption temporary protection key CPi, said identification data comprising a key identity CPid and an update index (ai+1) which defines said current version $CPid_{(ai+1)}$ of the decryption key amongst several versions, **characterised in that** it comprises the following steps:

- have the security module, during a request to use the sensitive item of information ISj coming from inside or outside the module, select said current version $CPid_{(ai+1)}$ of the decryption temporary protection key CPid associated with this sensitive item of information, using said identification data;
- have the security module decrypt the encrypted sensitive item of information $\overline{ISj}_{(ai+1)}$, using the current version $CPid_{(ai+1)}$ of the decryption temporary protection key CPid and the decryption algorithm, and temporarily store the sensitive item of information ISj in the decrypted form obtained so that it disappears from the security module after this sensitive item of information has been used; and
- have the security module use the sensitive item of information ISj in its decrypted form.

**4.** Operating method according to claim 3, to periodically modify the encrypted form of a sensitive item of information, comprising the following steps:

- have the security module decrypt the sensitive item of information stored in a current encrypted form $\overline{ISj}_{(ai+1)}$, using the current version

$CPid_{(ai+1)}$ of its associated decryption temporary protection key CPid and said decryption algorithm;

- have the security module select a new version $CPi_{(ai+2)}$ of the encryption temporary protection key CPi; then
- have the security module reencrypt the decrypted sensitive item of information ISj using the new version $CPi_{(ai+2)}$ of the encryption temporary protection key and said encryption algorithm to produce a new encrypted form $\overline{ISj}_{(ai+2)}$ of the sensitive item of information; and
- store, in the security module, the sensitive item of information in its new encrypted form $\overline{ISj}_{(ai+2)}$ and a new version $CPid_{(ai+2)}$ of the decryption temporary protection key CPid associated with said new version $CPi_{(ai+2)}$ of the encryption temporary protection key.

**5.** Method for operating according to claim 4, in which the security module comprises random number generation means supplying different successive versions of a random number, each current version $CPi_{(ai+1)}$ and new version $CPid_{(ai+2)}$ of the encryption temporary protection key CPi supplied by the security module being obtained from a different version of said random number.

**6.** Method for operating according to claim 4, which consists of storing in the non volatile memory (10) of the security module the two most recent versions of each decryption temporary protection key CPid, i.e. a last before one version $CPid_{ai}$ and a last version $CPid_{(ai+1)}$ and, when a new version $CPi_{(ai+2)}$ of any encryption temporary protection key is produced by the security module, having the security module store in the non volatile memory (10) a new corresponding version $CPid_{(ai+2)}$ of the associated decryption temporary protection key CPid, in place of the last before one version $CPid_{ai}$.

**7.** Method for operating according to claim 6, which consists of encrypting several items of sensitive information IS(j-1), ISj respectively with two different versions, a last before one version $CPi_{ai}$ and a last version $CPi_{(ai+1)}$ of the same encryption temporary protection key CPi to produce the encrypted forms $\overline{IS(j-1)}_{ai}$ and $\overline{ISj}_{(ai+1)}$ and, when a new version of these sensitive items of information must be produced by the security module, of executing the following steps:

- have the security module decrypt the sensitive items of information $\overline{IS(j-1)}_{ai}$ encrypted with the last before one version $CPi_{ai}$ of the encryption temporary protection key CPi, using the last before one version $CPid_{ai}$ of its associated decryption temporary protection key CPid;
- have the security module reencrypt the decrypted sensitive items of information IS(j-1) using said last version $CPi_{(ai+1)}$ of the encryption temporary protection key to produce a new encrypted form $\overline{IS(j-1)}_{(ai+1)}$ of the sensitive item of information; and
- store, in the security module, these sensitive items of information in their new encrypted form $\overline{IS(j-1)}_{(ai+1)}$; and, to produce said new version of the sensitive items of information IS(j-1), ISj, execute the following steps:

- have the security module decrypt all the sensitive items of information $\overline{IS(j-1)}_{(ai+1)}$ and $\overline{ISj}_{(ai+1)}$ concerning said encryption temporary protection key CPi using a last version $CPid_{(ai+1)}$ of the decryption temporary protection key CPid associated with said last version $CPi_{(ai+1)}$ of the encryption temporary protection key CPi;
- have the security module reencrypt the decrypted sensitive items of information IS(j-1), ISj, using a new version $CPi_{(ai+2)}$ of the encryption temporary protection key and said encryption algorithm to produce a new encrypted form $\overline{IS(j-1)}_{(ai+2)}$ and $\overline{ISj}_{(ai+2)}$ of these sensitive items of information; and
- store, in the security module, these sensitive items of information in their new encrypted form $\overline{IS(j-1)}_{(ai+2)}$ and $\overline{ISj}_{(ai+2)}$ and a new version $CPid_{(ai+2)}$ of the decryption temporary protection key CPid associated with said new version $CPi_{(ai+2)}$ of the encryption temporary protection key.

**8.** Security module (8) comprising information processing means (9) and information storage means (10,14), **characterised in that** it comprises:

- key production means designed to produce one or more encryption temporary protection keys CP1, ..., CPi, ..., CPn and as many associated decryption temporary protection keys CP1d, ..., CPid, ..., CPnd and, for each encryption CPi and decryption CPid temporary protection key, several successive versions $CPi_{ai}$, $CPi_{(ai+1)}$, $CPi_{(ai+2)}$ and $CPid_{ai}$, $CPid_{(ai+1)}$, $CPid_{(ai+2)}$;
- means designed to associate with a given sensitive item of information ISj a given encryption temporary protection key CPi and a decryption temporary protection key CPid associated with the encryption temporary protection key CPi;
- encryption means designed to perform successive encryptions of the sensitive item of information ISj using one or other of said successive versions $CPi_{ai}$, $CPi_{(ai+1)}$, $CPi_{(ai+2)}$ of the encryption temporary protection key associated with this sensitive item of information and an encryption algorithm stored in the storage means (10,14); and

- decryption means designed to perform successive decryptions of the sensitive item of information ISj using at each decryption, amongst said successive versions $CPid_{ai}$, $CPid_{(ai+1)}$, $CPid_{(ai+2)}$ of the decryption temporary protection key, that which is associated with the version of the encryption temporary protection key used for the corresponding encryption, and a decryption algorithm stored in the storage means (10,14).

**9.** Security module according to claim 8, comprising random number generation means supplying different successive versions of a random number, each of said successive versions $CPi_{ai}$, $CPi_{(ai+1)}$, $CPi_{(ai+2)}$ of each encryption temporary protection key CPi supplied by the security module being obtained from a different version of said random number.

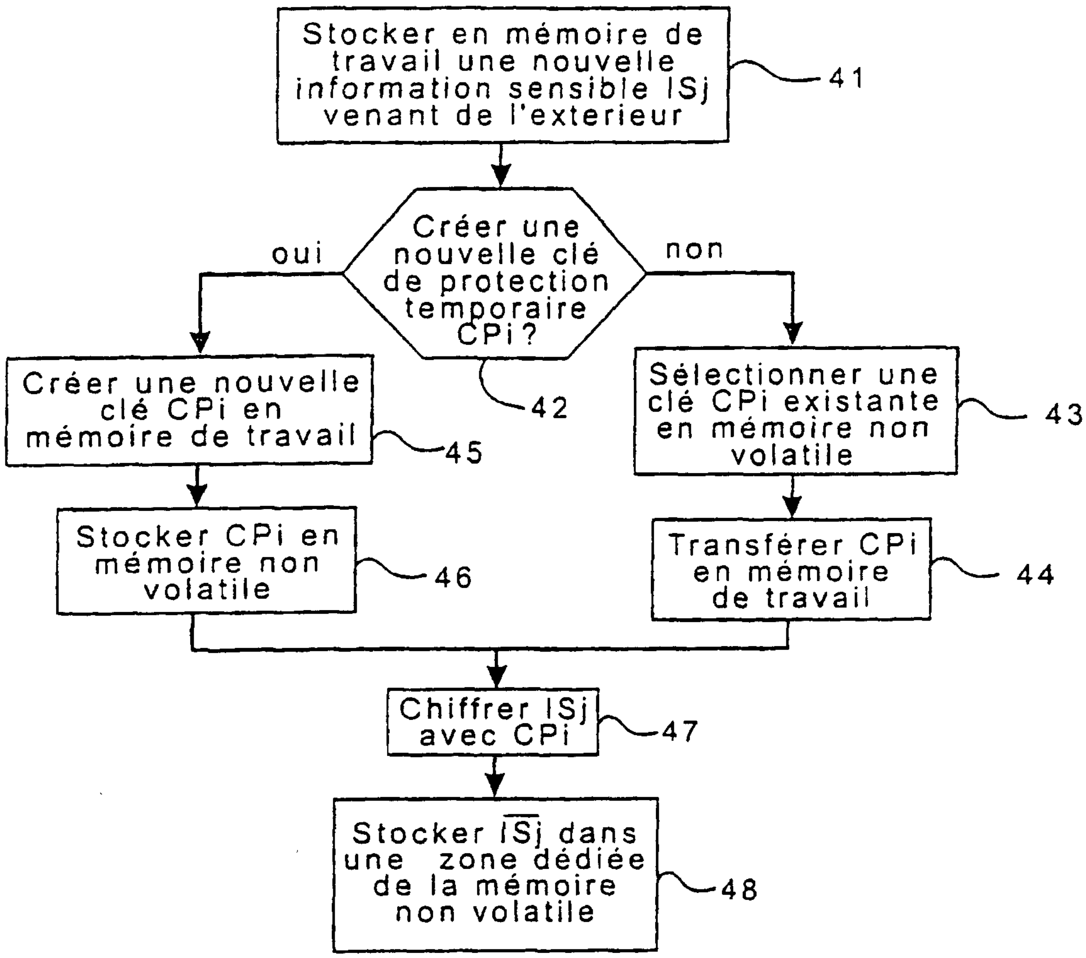
Stocker en mémoire de travail une nouvelle information sensible ISj venant de l'exterieur
41
Créer une nouvelle clé de protection temporaire CPi ?
oui
non
42
Créer une nouvelle clé CPi en mémoire de travail
45
Sélectionner une clé CPi existante en mémoire non volatile
43
Stocker CPi en mémoire non volatile
46
Transférer CPi en mémoire de travail
44
Chiffrer ISj avec CPi
47
Stocker $\overline{ISj}$ dans une zone dédiée de la mémoire non volatile
48

Fig.4

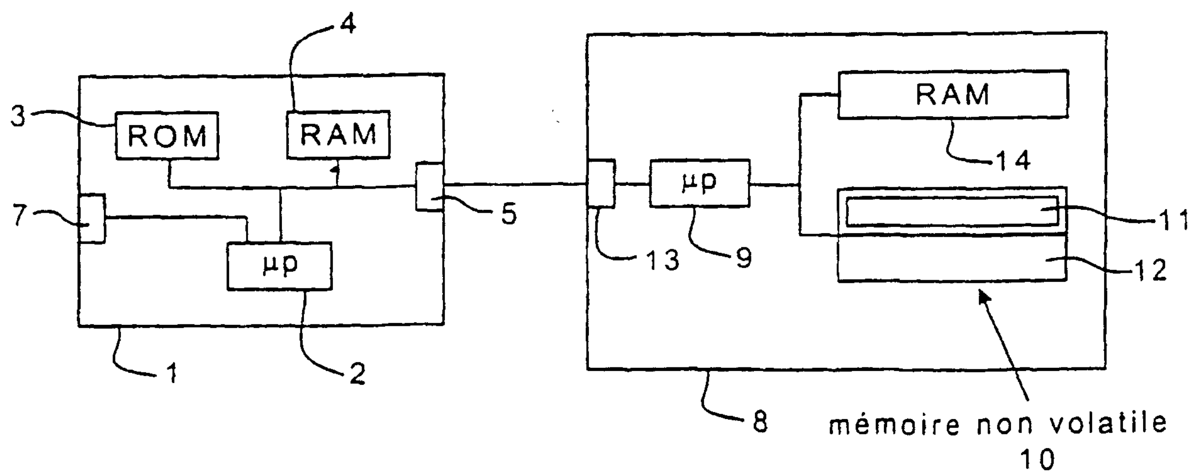
4
3
ROM
RAM
7
5
μp
1
2
RAM
14
μp
13
9
11
12
8
mémoire non volatile
10

Fig.1

| clés de protection temporaires | numéro de clé | indice de mise à jour | valeur stockée de la clé |
|---|---|---|---|
| CP1 | N1 | a1<br>-----<br>a1+1 | $CP1_{a1}$<br>-----<br>$CP1_{(a1+1)}$ |
| .<br>.<br>.<br>. | .<br>.<br>.<br>. | .<br>.<br>.<br>. | .<br>.<br>.<br>. |
| CPi | Ni | ai<br>-----<br>ai+1 | $CPi_{ai}$<br>-----<br>$CPi_{(ai+1)}$ |
| .<br>.<br>.<br>. | .<br>.<br>.<br>. | .<br>.<br>.<br>. | .<br>.<br>.<br>. |
| CPn | Nn | an<br>-----<br>an+1 | $CPn_{an}$<br>-----<br>$CPn_{(an+1)}$ |

Fig. 2

| Référence des informations sensibles | Numéro de la clé associée | Indice actuel de la clé | version stockée de l'information sensible |
|---|---|---|---|
| IS1 | N1 | a1+1 | $\overline{IS1}_{(a1+1)}$ |
| IS2 | N1 | a1+1 | $\overline{IS1}_{(a1+1)}$ |
| .<br>.<br>.<br>. | .<br>.<br>.<br>. | .<br>.<br>.<br>. | .<br>.<br>.<br>. |
| IS(j-1) | Ni | ai | $\overline{IS(j-1)}_{ai}$ |
| ISj | Ni | ai+1 | $\overline{ISj}_{(ai+1)}$ |
| .<br>.<br>.<br>. | .<br>.<br>.<br>. | .<br>.<br>.<br>. | .<br>.<br>.<br>. |
| ISm | Nn | an+1 | $\overline{ISm}_{(an+1)}$ |

Fig. 3

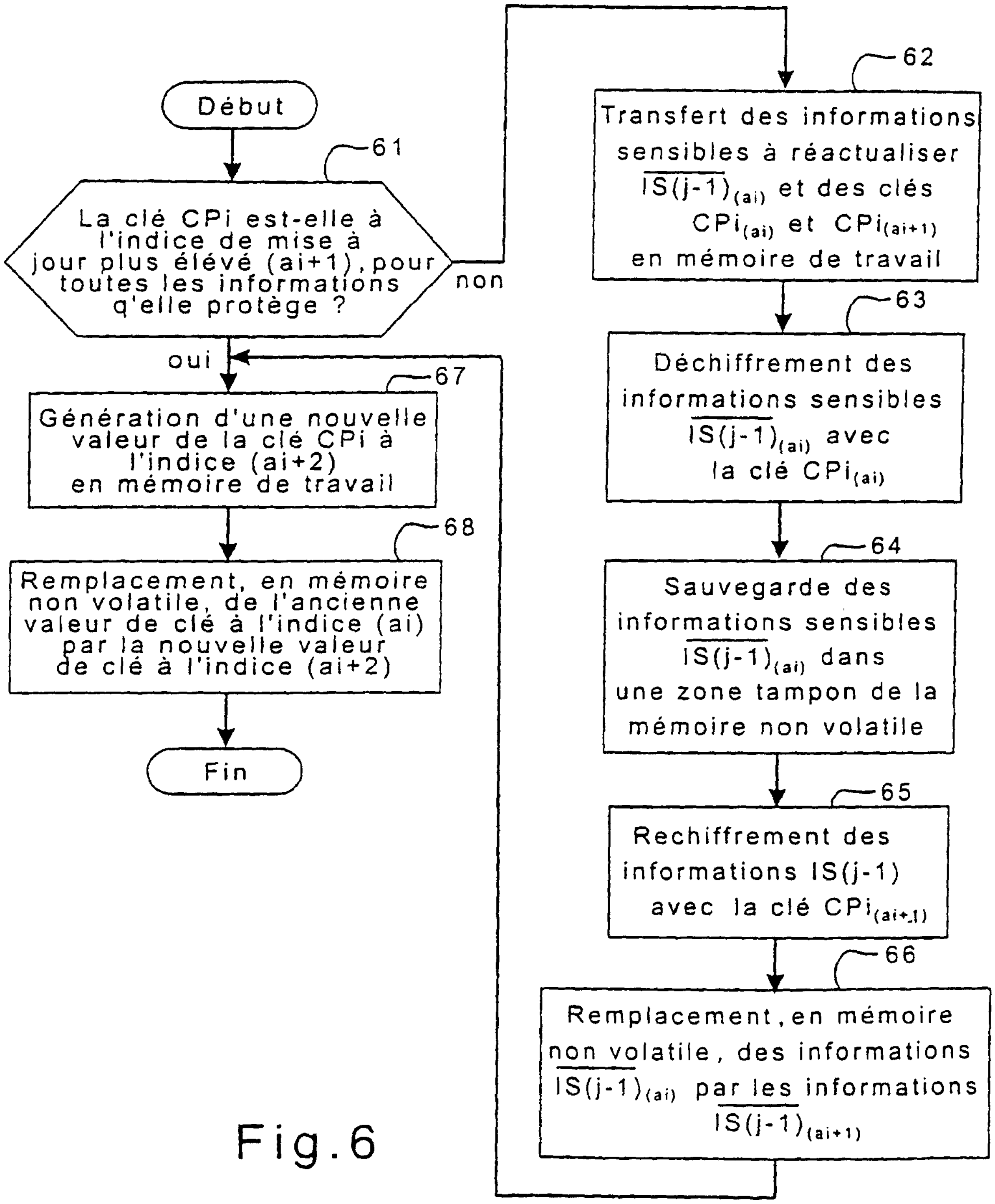
Début
61
La clé CPi est-elle à l'indice de mise à jour plus élévé (ai+1), pour toutes les informations q'elle protège ?
non
oui
62
Transfert des informations sensibles à réactualiser $\overline{IS(j-1)}_{(ai)}$ et des clés $CPi_{(ai)}$ et $CPi_{(ai+1)}$ en mémoire de travail
63
Déchiffrement des informations sensibles $\overline{IS(j-1)}_{(ai)}$ avec la clé $CPi_{(ai)}$
64
Sauvegarde des informations sensibles $\overline{IS(j-1)}_{(ai)}$ dans une zone tampon de la mémoire non volatile
65
Rechiffrement des informations IS(j-1) avec la clé $CPi_{(ai+1)}$
66
Remplacement, en mémoire non volatile, des informations $\overline{IS(j-1)}_{(ai)}$ par les informations $\overline{IS(j-1)}_{(ai+1)}$
67
Génération d'une nouvelle valeur de la clé CPi à l'indice (ai+2) en mémoire de travail
68
Remplacement, en mémoire non volatile, de l'ancienne valeur de clé à l'indice (ai) par la nouvelle valeur de clé à l'indice (ai+2)
Fin

Fig.6

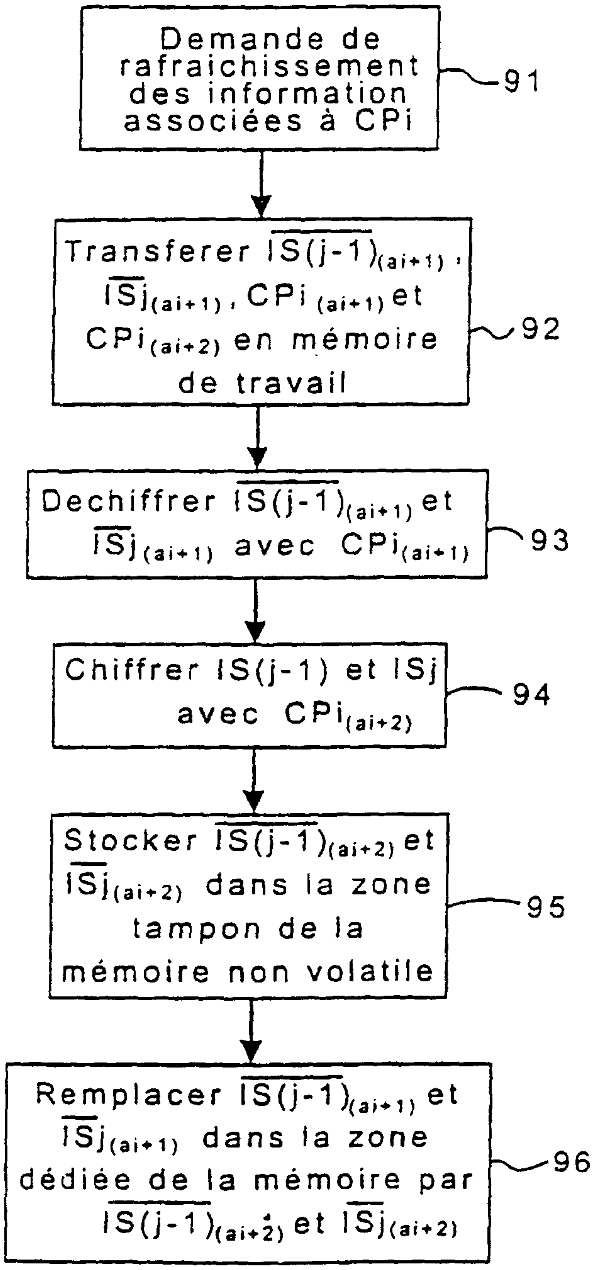
Demande de rafraichissement des information associées à CPi
91
Transferer $\overline{IS(j-1)}_{(ai+1)}$, $\overline{ISj}_{(ai+1)}$, $CPi_{(ai+1)}$ et $CPi_{(ai+2)}$ en mémoire de travail
92
Dechiffrer $\overline{IS(j-1)}_{(ai+1)}$ et $\overline{ISj}_{(ai+1)}$ avec $CPi_{(ai+1)}$
93
Chiffrer IS(j-1) et ISj avec $CPi_{(ai+2)}$
94
Stocker $\overline{IS(j-1)}_{(ai+2)}$ et $\overline{ISj}_{(ai+2)}$ dans la zone tampon de la mémoire non volatile
95
Remplacer $\overline{IS(j-1)}_{(ai+1)}$ et $\overline{ISj}_{(ai+1)}$ dans la zone dédiée de la mémoire par $\overline{IS(j-1)}_{(ai+2)}$ et $\overline{ISj}_{(ai+2)}$
96

Fig.9

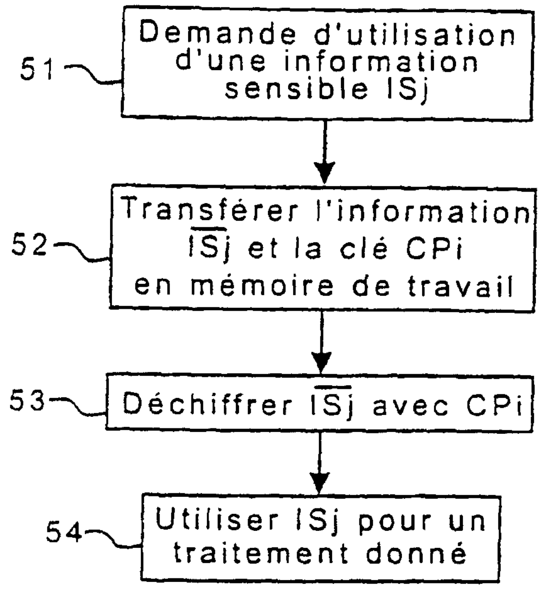
Demande d'utilisation d'une information sensible ISj
51
Transférer l'information $\overline{ISj}$ et la clé CPi en mémoire de travail
52
Déchiffrer $\overline{ISj}$ avec CPi
53
Utiliser ISj pour un traitement donné
54

Fig.5

| clés de protection temporaires | numéro de clé | indice de mise à jour | valeur stockée de la clé |
|---|---|---|---|
| CP1 | N1 | a1<br>------------<br>a1+1 | $CP1_{a1}$<br>---------------<br>$CP1_{(a1+1)}$ |
| ⋮ | ⋮ | ⋮ | ⋮ |
| CPi | Ni | **ai+2**<br>------------<br>ai+1 | **$CPi_{(ai+2)}$**<br>---------------<br>$CPi_{(ai+1)}$ |
| ⋮ | ⋮ | ⋮ | ⋮ |
| CPn | Nn | an<br>------------<br>an+1 | $CPn_{an}$<br>---------------<br>$CPn_{(an+1)}$ |

**Fig. 7**

| Référence des informations sensibles | Numéro de la clé associée | Indice actuel de la clé | version stockée de l'information sensible | Nouvel Indice de la clé | nouvelle version stockée de l'information sensible |
|---|---|---|---|---|---|
| IS1 | N1 | a1+1 | $\overline{IS1}_{(a1+1)}$ | | |
| IS2 | N1 | a1+1 | $\overline{IS1}_{(a1+1)}$ | | |
| ⋮ | ⋮ | ⋮ | ⋮ | ⋮ | ⋮ |
| IS(j-1) | Ni | **ai+1** | **$\overline{IS(j-1)}_{(ai+1)}$** | **ai+2** | **$\overline{IS(j-1)}_{(ai+2)}$** |
| ISj | Ni | ai+1 | $\overline{ISj}_{(ai+1)}$ | **ai+2** | **$\overline{ISj}_{(ai+2)}$** |
| ⋮ | ⋮ | ⋮ | ⋮ | ⋮ | ⋮ |
| ISm | Nn | an+1 | $\overline{ISm}_{(an+1)}$ | | |

**Fig. 8**